# EUROPEAN PATENT SPECIFICATION

(11) **EP 3 812 443 B1**
(45) Date of publication and mention of the grant of the patent: **06.08.2025**
(21) Application number: 19822771.2
(22) Date of filing: 10.06.2019
(51) Int. Cl.: C09K 5/06, C10G 73/42, C10G 73/40, C10G 73/44

(54) **METHOD FOR PRODUCING SERIES OF PHASE CHANGE WAX PRODUCTS**
VERFAHREN ZUR HERSTELLUNG EINER REIHE VON PHASENWECHSEL-WACHSPRODUKTEN
PROCÉDÉ POUR LA PRODUCTION D'UNE SÉRIE DE PRODUITS À BASE DE CIRE À CHANGEMENT DE PHASE

(30) Priority: 22.06.2018 CN 201810659572
(43) Date of publication of application: 28.04.2021
(73) Proprietor: INNER MONGOLIA YITAI COAL-BASED NEW MATERIALS RESEARCH INSTITUTE CO., LTD., Erdos, Inner Mongolia 010700 (CN)
(72) Inventor: LI, Juncheng, Erdos Inner Mongolia 010700 (CN); MIAO, Heng, Erdos Inner Mongolia 010700 (CN); QIAN, Zhen, Erdos Inner Mongolia 010700 (CN); ZHENG, Huiyue, Erdos Inner Mongolia 010700 (CN); MA, Guoqing, Erdos Inner Mongolia 010700 (CN); ZHOU, Yan, Erdos Inner Mongolia 010700 (CN); JIAN, Qinge, Erdos Inner Mongolia 010700 (CN); GUO, Lianglan, Erdos Inner Mongolia 010700 (CN)
(74) Representative: Marks & Clerk LLP
(86) International application number: PCT/CN2019/090561
(87) International publication number: WO 2019/242522

(56) References cited:
- CN-A- 103 975 044
- CN-A- 105 505 331
- CN-A- 106 554 822

## Description

### Technical field

The present invention belongs to the technical field of chemical engineering, and specifically relates to a method of producing series of phase-change wax products.

### Background

Phase-change energy storage materials utilize the phase change process of the materials to absorb heat (cold) from the environment or release heat (cold) to the environment, so as to achieve the purpose of storing or releasing energy, and regulating the mismatch of demand and supply of energy. The phase-change energy storage wax is one of phase-change energy storage materials, which can effectively avoid the supercooling phenomenon and the phase separation phenomenon of the inorganic phase-change materials, and overcome defects such as the inorganic phase-change materials cannot be used repeatedly. Generally, a phase-change material is required to have a proper phase-change temperature and a large latent heat of phase change. According to the temperature range of energy storage, the phase-change energy storage wax can be divided into high-temperature, medium-temperature, low-temperature types and the like. The low- and medium-temperature phase-change wax can be widely used in civil fields including energy conservation of buildings, agriculture facility, daily necessities (such as temperature-adjusting textile fabrics, heat-proof shells of electric appliance and the like) and the pharmaceutical industry. The high-temperature phase-change wax is mainly used in the fields of solar energy utilization, hot water systems, electronic elements, automatic control and the like.

The Fischer-Tropsch synthetic wax, as a methylene polymer, is a mixture of alkanes obtained by catalytic polymerization of synthetic gas at medium temperature and medium pressure. The composition of Fischer-Tropsch synthetic wax is relatively simple, wherein the content of straight-chain normal-alkanes is more than 90%, and the rest are substantially branched alkanes. Straight-chain normal-alkanes substantially do not contain cyclic hydrocarbons or aromatic hydrocarbons. Compared to isomeric-alkanes and cycloalkanes, the phase-change latent heat of normal-alkanes is greater, and the Fischer-Tropsch wax is chemically stable, non-corrosive and does not pollute the environment, which is exactly the biggest advantage of Fischer-Tropsch wax for using to produce the phase-change wax. However, the Fischer-Tropsch wax has a wider range of carbon number distribution, and has a lower phase-change latent heat when directly used as a phase-change wax material, and a wider phase-change range. Meanwhile, the small amount of isomeric-alkanes contained therein also affects the improvement of the phase-change latent heat.

The refined Fischer-Tropsch wax has a wide range of carbon number distribution, with a maximum carbon number of more than 100. A low-, medium- and high-temperature series of phase-change wax products can be produced by precision fractionation. In one technical solution of prior art, the following steps are performed: a coal-based Fischer-Tropsch synthetic wax is used as a raw material, a fraction of low-temperature phase-change wax product is obtained by molecular short-path distillation, and a stable phase-change wax product is obtained by adding NNO. The separation accuracy of molecular short-path distillation is lower than that of rectification device, which shows that the product has a wider carbon number distribution and a lower enthalpy value, and that the phase-change enthalpy values of the phase-change wax at the temperature of more than 40°C are not higher than 160 J/g; and the separated fraction can form a stable product by adding NNO.

In another technical solution, diesel fuel fraction wax is used as a raw material, and 20#, 25#, 30# and 35# low-melting-point phase-change wax products are produced through the process of solvent dewaxing and precision cutting of real-boiling-point, wherein the phase-change enthalpy is more than 120J/g. When the low-temperature phase-change wax is produced by using petroleum wax as a raw material, the raw material needs to be subjected to solvent dewaxing to increase the content of normal-hydrocarbon in the raw material, so as not to affect the increase of enthalpy value of a product. The product has a lower phase-change enthalpy value and is limited by the structure of the raw material. So there are fewer types of phase-change wax products.

CN103975044A describes a Fischer-Tropsch derived paraffin wax comprising paraffins having from 9 to 24 carbon atoms. In another example there is described a thermal energy storage material including a Fischer-Tropsch derived paraffin wax comprising paraffins having from 9 to 24 carbon atoms, which Fischer-Tropsch derived paraffin wax has a melting point in the range of 15 to 40 DEG C.

CN106554822A describes a deoiling method for Fischer-Tropsch synthesis wax. The deoiling method includes the following steps: a methyl isobutyl ketone solvent is used as a single solvent to dilute oil-bearing Fischer-Tropsch synthesis wax; a solvent-containing crystalline liquid is obtained after a plurality of dilutions and cooling crystallizations; and the crystalline liquid is filtered through a filter to obtain a deoiled cerate, and the product wax is obtained after the deoiled cerate is evaporated and the solvent is recovered.

### Summary of the invention

To address the defects of the above technologies, by utilizing the advantages of the unique structure of Fischer-Tropsch synthetic wax, and further reducing the content of isomeric-hydrocarbon, thereby increasing the content of normal-hydrocarbon by more than 95%, and then designing a reduced pressure rectification device and controlling the operating conditions of the device, series of phase-change wax fractions with a narrow distribution of carbon number and a high enthalpy value are separated in the present invention. The product fractions are continuous, and series of phase-change waxes with a melting point of 5-80°C could be obtained.

In order to achieve the purpose, the following technical solutions are used in the present invention:
a method of producing series of phase-change wax products, comprising:
refining a Fischer-Tropsch synthetic wax raw material via hydrogenation reaction to obtain a refined Fischer-Tropsch wax;
subjecting the refined Fischer-Tropsch wax to reduced pressure distillation in a rectification column, separating continuous fraction with the distillation range of 5-30 °C by continuously increasing the operation temperature, to obtain series of phase-change wax products, wherein the pressure of the reduced pressure distillation is 0 to 1000Pa, the operation temperature at the top of the rectification column is 120-260°C, and the phase -change enthalpy value of the series of phase-change wax products is ≥ 170J/g;
wherein the method further comprises, before the reduced pressure distillation, reducing the content of isomeric-hydrocarbon in the refined Fischer-Tropsch wax to increase the content of normal-alkane in the raw material to 95% or more; and
wherein the method of reducing the content of the isohydrocarbon in the refined Fischer-Tropsch wax comprises dilution with butanone and crystallization in steps.

Preferably, the operation temperature of the hydrogenation reaction is 240-340°C, and the operation pressure is 3-8 MPa.

Preferably, the freezing point of the refined Fischer-Tropsch wax is 40-90°C.

Preferably, the reduced pressure distillation comprises: under the conditions of a pressure of 1000Pa and an operation temperature of 140-150°C at the top of the rectification column, a fraction at a temperature of 280-300°C is separated, with a melting point of 15±2.5°C and a phase-change enthalpy value of ≥170J/g; under the condition of an operation temperature of 150-160°C at the top of the rectification column, a fraction at a temperature of 300-315°C is separated, with a melting point of 20±2.5 °C and a phase-change enthalpy value of ≥170J/g; under the condition of an operation temperature of 160-170 °C at the top of the column, the fraction at the temperature of 315-330°C is separated, with a melting point of 25±2.5°C and a phase-change enthalpy value of ≥170J/g; a series of phase-change wax products having a melting point of 60°C can be separated by continuously increasing the operation temperature.

Preferably, the reduced pressure distillation comprises: under the conditions of a pressure of 10Pa and an operation temperature of 115-130°C at the top of the rectification column, a fraction at a temperature of 350-375°C is separated, with a melting point of 35±2.5°C and a phase-change enthalpy value of ≥180J/g; under the condition of an operation temperature of 130-145°C at the top of the rectification column, a fraction at a temperature of 375-400°C is separated, with a melting point of 45±2.5 °C and a phase-change enthalpy value of ≥190J/g; under the condition of an operation temperature of 145-160°Cat the top of the rectification column, a fraction at a temperature of 400-425°C is separated, with a melting point of 50±2.5C and a phase-change enthalpy value of ≥190J/g; a series of phase-change wax products having a melting point up to 60°C can be separated by continuously increasing the operation temperature.

Preferably, the carbon number of each phase-change wax product is 3-5.

Preferably, the phase-change temperature of the series of phase-change wax products is 5-80°C.

The technical solution of the present invention has the following beneficial effects in view of the prior art:
1. The Fischer-Tropsch wax is selected as a raw material. The composition of Fischer-Tropsch wax is simple, wherein the content of straight-chain normal- alkanes is more than 90%, and the rest are substantially branched alkanes, and it substantially does not contain cyclic hydrocarbons or aromatic hydrocarbons. Compared with isomeric-alkanes and cycloalkanes, the phase-change latent heat of the normal-alkanes is greater, and the refined Fischer-Tropsch wax is chemically stable, non-corrosive and does not pollute the environment. Therefore, the Fischer-Tropsch wax is an ideal raw material for producing the phase-change wax.
2. Compared with the separation of refined Fischer-Tropsch wax by molecular distillation (short path distillation), the invention has the following advantages: according to the properties (melting point of 5-80°C) of the product of interest, the separated components are lighter, and the reduced pressure degree and the temperature are not required to be very high; less cracking of material occurs, so a wiped film evaporator which is expensive and difficult to operate is not required to be used. Instead, a reduced pressure rectification device can be used to accurately separate narrow-range components, reducing the difficulty of operation and the cost of hardware. At the same time, the method has high accuracy for product separation. Through the design of the rectification column and the control of operating conditions, continuous separation of fractions with a distillation range of 5-30°C can be achieved, and finally phase-change wax products of various grades with melting points of 5-80°C can be separated from the refined Fischer-Tropsch wax. The products have narrow carbon number range and relatively high enthalpy values (more than 170kJ/kg).
3. The products of the process have the advantages of high flexibility, can be customized on demand, have low production cost. The industrial production of the products can be realized.

### Specific mode for carrying out the invention

In order to make the purposes, technical solutions and advantages of the present invention more apparent, the present invention is further described in detail with reference to specific Examples.

In the present invention, Fischer-Tropsch synthetic wax is selected as a raw material for preparing series of phase-change wax products, and a method for preparing a phase-change wax with a simple process is provided, including the following steps: firstly, the Fischer-Tropsch synthetic wax is refined by hydrogenation reaction, to effectively remove substances such as olefins, oxygen-containing compounds and the like which may influence the product quality. The refined Fischer-Tropsch wax is treated by solvent removal of isomeric-hydrocarbon to make the content of normal-alkane to be 95% or more; Through separation by reduced pressure distillation and controlling the distillation range of the separated fraction within 5-30 °C , series of phase-change wax products with high-quality can be separated, wherein the content of normal-hydrocarbon is 95% or more and the carbon number is mainly 3-5 carbons. This method has the following advantages: realizing customized production on demand, realizing the full utilization of raw materials, reducing waste, reducing costs and effectively improving economic benefit.

In one embodiment, a low-temperature Fischer-Tropsch synthetic wax is used as a raw material, and a refined Fischer-Tropsch wax is obtained by hydrogenation reaction. The operation temperature of the hydrogenation reaction is 240-340°C, and the operation pressure is 3-8 Mpa. The purpose of refinement by hydrogenation reaction is to saturate a small amount of olefins in the Fischer-Tropsch synthetic wax, reduce a small amount of oxygen-containing organic compounds in the Fischer-Tropsch synthetic wax and break the chains of a small amount of polycyclic hydrocarbons in the Fischer-Tropsch synthetic wax. If these substances are not removed, on the one hand, they will affect the color of the products separated from Fischer-Tropsch wax, and on the other hand, it is easy to generate coking and carbon deposition in the subsequent processing, thereby influencing the quality and normal production of the products. The isomeric-hydrocarbon can be further removed from the refined Fischer-Tropsch wax by sweating, solvent deoiling and other means of removing isomeric hydrocarbons.

In one embodiment, a butanone solvent is used as a single solvent to dilute the oil-containing Fischer-Tropsch wax, and after a pre-dilution, first dilution, second dilution and third dilution and crystallization by cooling, a solvent-containing crystallization liquid is obtained. The crystallization liquid is filtered by a filter to obtain deoiled cerate, and the deoiled cerate is evaporated to recover the solvent to obtain the product of wax. When the dilution is carried out for many times, excessive consumption of cooling calories in single cooling can be avoided, and the energy consumption for cooling is saved. The normal-alkane content of the deoiled refined Fischer-Tropsch wax is increased to more than 95% (the step is determined by the normal-hydrocarbon content in the raw material, and if the normal-hydrocarbon content in the raw material reaches more than 95%, this step can be omitted).

The refined Fischer-Tropsch wax is separated in a packed rectification column with a reaction pressure of 0-1000Pa and a temperature at the top of the column of 120-260°C. Continuous fractions with a distillation range of 5-30°C can be separated and divided into phase-change wax products of various grades according to the melting point of each fraction. The invention can obtain series of phase change wax products with stable phase change temperature at 5-80°C.

### Example 1

A low-temperature Fischer-Tropsch synthetic wax is used as a raw material and refined by hydrogenation reaction to obtain a refined Fischer-Tropsch wax, wherein the freezing point is 45°C, the initial boiling point is 286°C, and the normal-alkane content in the raw material wax is 95.3%.

The refined Fischer-Tropsch wax is subject to the following steps: under a pressure of 1000Pa and an operation temperature of 140-150°C at the top of the column, a fraction at the temperature of 280-300°C is separated, with a melting point of 15±2.5°C and a phase-change enthalpy value of ≥170J/g; continuously increasing the operation temperature of the rectifying column, under the condition of an operation temperature of 150-160°C at the top of the column, a fraction at the temperature of 300-315°C was separated, with a melting point of 20±2.5°C and a phase-change enthalpy value of ≥170J/g; continuously increasing the operation temperature of the rectifying column, under the condition of an operation temperature of 160-170°C at the top of the column, a fraction at the temperature of 315-330°C was separated, with a melting point of 25±2.5°C and a phase-change enthalpy value of ≥170J/g; with the continuous increase of the operation temperature of the rectifying column, phase-change wax fractions of various grades with distillation range of 10°C and melting point of 15-55°C can be separated according to requirements and can be directly used as a phase-change wax product.

### Example 2

A Fischer-Tropsch synthetic wax is used as a raw material and refined by hydrogenation reaction to obtain a refined Fischer-Tropsch wax, wherein the freezing point is 85°C, the normal-alkane content is 92.1%, and the normal-alkane content reaches 98.3% after dilution with butanone and deoiling by crystallization in steps.

The refined Fischer-Tropsch wax is subject to the following steps: under a pressure of 10Pa and an operation temperature of 115-130°C at the top of the column, a fraction at the temperature of 350-375 °C is separated, with a melting point of 35±2.5°C and a phase-change enthalpy value of ≥180J/g; continuously increasing the operation temperature of the rectifying column, under the condition of an operation temperature of 130-145°C at the top of the column, a fraction at the temperature of 375-400°C was separated, with a melting point of 45±2.5°C and a phase-change enthalpy value of ≥190J/g; continuously increasing the operation temperature of the rectifying column, under the condition of an operation temperature of 145-160°C at the top of the column, a fraction at the temperature of 400-425°C was separated, with a melting point of 50±2.5 °C and a phase-change enthalpy value of ≥190J/g; with the continuous increase of the operation temperature of the rectifying column, phase-change wax fractions of various grades with distillation range of 20°C and melting point of 25-80°C can be separated according to requirements and can be directly used as a phase-change wax product.

The specific Examples described above further describe the purpose, technical solutions and beneficial effects of the present invention in detail.

## Claims

1. A method of producing series of phase-change wax products, **characterized in that** it comprises:
refining a Fischer-Tropsch synthesis wax raw material via a hydrogenation reaction to obtain a refined Fischer-Tropsch wax;
subjecting the refined Fischer-Tropsch wax to reduced pressure distillation in a rectification column, separating continuous fractions with a distillation range of 5-300°C by continuously increasing the operation temperature, to obtain series of phase-change wax products, wherein the pressure for the reduced pressure distillation is 0 to 1000Pa, the operation temperature at the top of the rectification column is 120-260°C, and the phase -change enthalpy value of the series of phase-change wax products is ≥ 170J/g;
wherein the method further comprises, before the reduced pressure distillation, reducing the content of isomeric-hydrocarbon in the refined Fischer-Tropsch wax to increase the content of normal-alkane in the raw material to 95wt % or more; and
wherein the method of reducing the content of isomeric-hydrocarbon in the refined Fischer-Tropsch wax comprises dilution with butanone and crystallization in steps.

2. The method of claim 1, wherein the operation temperature of the hydrogenation reaction is 240-340°C, and the operation pressure is 3-8 MPa.

3. The method of claim 1 or 2, wherein the freezing point of the refined Fischer-Tropsch wax is 40-90°C.

4. The method of any one of claims 1-3, wherein the reduced pressure distillation comprises: under the conditions of a pressure of 1000Pa and an operation temperature of 140-150°C at the top of the rectification column, a fraction at a temperature of 280-300°C is separated, with a melting point of 15±2.5°C and a phase-change enthalpy value of ≥170J/g; under the condition of an operation temperature of 150-160 °C at the top of the rectification column, a fraction at a temperature of 300-315°C is separated, with a melting point of 20±2.5°C and a phase-change enthalpy value of ≥170J/g; under the condition of an operation temperature of 160-170 °C at the top of the rectification column, a fraction at a temperature of 315-330°C is separated, with a melting point of 25±2.5 °C and a phase-change enthalpy value of ≥170J/g; a series of phase-change wax products having a melting point of 60°C are separated by continuously increasing the operation temperature.

5. The method of any one of claims 1-3, wherein the reduced pressure distillation comprises: under the conditions of a pressure of 10Pa and an operation temperature of 115-130°C at the top of the rectification column, a fraction at a temperature of 350-375°C was separated, with a melting point of 35±2.5°C and a phase-change enthalpy value of ≥180J/g; under the condition of an operation temperature of 130-145 °C at the top of the rectification column, a fraction at a temperature of 375-400 °C was separated, with a melting point of 45±2.5°C and a phase-change enthalpy value of ≥190J/g; under the condition of an operation temperature of 145-160°C at the top of the rectification column, a fraction at a temperature of 400-425°C was separated, with a melting point of 50±2.5°C and a phase-change enthalpy value of ≥190J/g; a series of phase-change wax products having a melting point of 60°C are separated by continuously increasing the operation temperature.

6. The method of any one of claims 1-5, wherein the carbon number of each phase-change wax product is 3-5.

7. The method of any one of claims 1-6, wherein the phase-change temperature of the series of phase-change wax products is 5-80°C.

## Patentansprüche

1. Verfahren zur Herstellung von Serien von Phasenwechselwachsprodukten, **dadurch gekennzeichnet, dass** es Folgendes umfasst:
Raffinieren eines Fischer-Tropsch-Synthese-Wachsrohstoffs über eine Hydrierungsreaktion, um ein raffiniertes Fischer-Tropsch-Wachs zu erzielen;
Unterwerfen des raffinierten Fischer-Tropsch-Wachses unter eine Destillation unter vermindertem Druck in einer Rektifikationssäule, Trennen kontinuierlicher Fraktionen mit einem Destillationsbereich von 5 bis 30 °C durch kontinuierliches Erhöhen der Betriebstemperatur, um Serien von Phasenwechselwachsprodukten zu erzielen, wobei der Druck für die Destillation unter vermindertem Druck 0 bis 1000 Pa beträgt, die Betriebstemperatur am Kopf der Rektifikationssäule 120 bis 260 °C beträgt und der Phasenwechselenthalpiewert der Serien von Phasenwechselwachsprodukten ≥ 170 J/g beträgt;
wobei das Verfahren ferner vor der Destillation unter vermindertem Druck das Reduzieren des Gehalts an isomerem Kohlenwasserstoff in dem raffinierten Fischer-Tropsch-Wachs umfasst, um den Gehalt an normalem Alkan in dem Rohstoff auf 95 Gew.-% oder mehr zu erhöhen; und
wobei das Verfahren zum Reduzieren des Gehalts an isomerem Kohlenwasserstoff in dem raffinierten Fischer-Tropsch-Wachs das Verdünnen mit Butanon und das Kristallisieren in Schritten umfasst.

2. Verfahren nach Anspruch 1, wobei die Betriebstemperatur der Hydrierungsreaktion 240 bis 340 °C beträgt und der Betriebsdruck 3 bis 8 MPa beträgt.

3. Verfahren nach Anspruch 1 oder 2, wobei der Gefrierpunkt des raffinierten Fischer-Tropsch-Wachses 40 bis 90 °C beträgt.

4. Verfahren nach einem der Ansprüche 1 bis 3, wobei die Destillation unter vermindertem Druck Folgendes umfasst: unter den Bedingungen eines Drucks von 1000 Pa und einer Betriebstemperatur von 140 bis 150 °C am Kopf der Rektifikationssäule wird eine Fraktion bei einer Temperatur von 280 bis 300 °C mit einem Schmelzpunkt von 15 ± 2,5 °C und einem Phasenwechselenthalpiewert von ≥ 170 J/g abgetrennt; unter der Bedingung einer Betriebstemperatur von 150 bis 160 °C am Kopf der Rektifikationssäule wird eine Fraktion bei einer Temperatur von 300 bis 315 °C mit einem Schmelzpunkt von 20 ± 2,5 °C und einem Phasenwechselenthalpiewert von ≥ 170 J/g abgetrennt; unter der Bedingung einer Betriebstemperatur von 160 bis 170 °C an der Spitze der Rektifikationssäule wird eine Fraktion bei einer Temperatur von 315 bis 330 °C mit einem Schmelzpunkt von 25 ± 2,5 °C und einem Phasenwechselenthalpiewert von ≥ 170 J/g abgetrennt; durch kontinuierliches Erhöhen der Betriebstemperatur wird eine Serie von Phasenwechselwachsprodukten mit einem Schmelzpunkt von 60 °C abgetrennt.

5. Verfahren nach einem der Ansprüche 1 bis 3, wobei die Destillation unter vermindertem Druck Folgendes umfasst: unter den Bedingungen eines Drucks von 10 Pa und einer Betriebstemperatur von 115 bis 130 °C am Kopf der Rektifikationssäule wurde eine Fraktion bei einer Temperatur von 350 bis 375 °C mit einem Schmelzpunkt von 35 ± 2,5 °C und einem Phasenwechselenthalpiewert von ≥ 180 J/g abgetrennt; unter der Bedingung einer Betriebstemperatur von 130 bis 145 °C am Kopf der Rektifikationssäule wurde eine Fraktion bei einer Temperatur von 375 bis 400 °C mit einem Schmelzpunkt von 45±2,5 °C und einem Phasenwechselenthalpiewert von ≥ 190 J/g abgetrennt; unter der Bedingung einer Betriebstemperatur von 145 bis 160 °C an der Spitze der Rektifikationssäule wurde eine Fraktion bei einer Temperatur von 400 bis 425 °C mit einem Schmelzpunkt von 50 ± 2,5 °C und einem Phasenwechselenthalpiewert von ≥ 190 J/g abgetrennt; durch kontinuierliches Erhöhen der Betriebstemperatur wird eine Serie von Phasenwechselwachsprodukten mit einem Schmelzpunkt von 60 °C abgetrennt.

6. Verfahren nach einem der Ansprüche 1 bis 5, wobei die Kohlenstoffzahl jedes Phasenwechselwachsprodukts 3 bis 5 beträgt.

7. Verfahren nach einem der Ansprüche 1 bis 6, wobei die Phasenwechseltemperatur der Serie von Phasenwechselwachsprodukten 5 bis 80 °C beträgt.

## Revendications

1. Procédé de production de séries de produits en cire à changement de phase, **caractérisé en ce qu'**il comprend :
le raffinage d'une matière première de cire issue d'une synthèse de Fischer-Tropsch par une réaction d'hydrogénation pour obtenir une cire de Fischer-Tropsch raffinée,
la soumission de la cire de Fischer-Tropsch raffinée à une distillation sous pression réduite dans une colonne de rectification, la séparation de fractions continues avec un intervalle de distillation de 5 à 30 °C en augmentant en continu la température de fonctionnement pour obtenir des séries de produits en cire à changement de phase, dans lequel la pression de distillation sous pression réduite est de 0 à 1000 Pa, la température de fonctionnement en tête de la colonne de rectification est de 120 à 260 °C, et la valeur d'enthalpie de changement de phase des séries de produits en cire à changement de phase est ≥ 170 J/g,
dans lequel le procédé comprend en outre, avant la distillation sous pression réduite, la réduction de la teneur en hydrocarbures isomères dans la cire de Fischer-Tropsch raffinée pour augmenter la teneur en alcanes normaux dans la matière première à 95 % en poids ou plus, et
dans lequel le procédé de réduction de la teneur en hydrocarbures isomères dans la cire de Fischer-Tropsch raffinée comprend la dilution avec du butanone et la cristallisation par étapes.

2. Procédé selon la revendication 1, dans lequel la température de fonctionnement de la réaction d'hydrogénation est de 240 à 340 °C, et la pression de fonctionnement est de 3 à 8 MPa.

3. Procédé selon la revendication 1 ou 2, dans lequel le point de congélation de la cire de Fischer-Tropsch raffinée est de 40 à 90 °C.

4. Procédé selon l'une quelconque des revendications 1 à 3, dans lequel la distillation sous pression réduite comprend les opérations suivantes : dans des conditions de pression de 1000 Pa et de température de fonctionnement de 140 à 150 °C au niveau de la tête de la colonne de rectification, une fraction à une température de 280 à 300 °C, ayant un point de fusion de 15 ± 2,5 °C et une valeur d'enthalpie de changement de phase ≥ 170 J/g, est séparée ; sous condition d'une température de fonctionnement de 150 à 160 °C au niveau de la tête de la colonne de rectification, une fraction à une température de 300 à 315 °C, ayant un point de fusion de 20 ± 2,5 °C et une valeur d'enthalpie de changement de phase ≥ 170 J/g, est séparée ; sous condition d'une température de fonctionnement de 160 à 170 °C au niveau de la tête de la colonne de rectification, une fraction à une température de 315 à 330 °C, ayant un point de fusion de 25 ± 2,5 °C et une valeur d'enthalpie de changement de phase ≥ 170 J/g, est séparée ; une série de produits en cire à changement de phase ayant un point de fusion de 60 °C sont séparés en augmentant en continu la température de fonctionnement.

5. Procédé selon l'une quelconque des revendications 1 à 3, dans lequel la distillation sous pression réduite comprend les opérations suivantes : dans des conditions de pression de 10 Pa et de température de fonctionnement de 115 à 130 °C au niveau de la tête de la colonne de rectification, une fraction à une température de 350 à 375 °C, ayant un point de fusion de 35 ± 2,5 °C et une valeur d'enthalpie de changement de phase ≥ 180 J/g, a été séparée ; sous condition d'une température de fonctionnement de 130 à 145 °C au niveau de la tête de la colonne de rectification, une fraction à une température de 375 à 400 °C, ayant un point de fusion de 45 ± 2,5 °C et une valeur d'enthalpie de changement de phase ≥ 190 J/g, a été séparée ; sous condition d'une température de fonctionnement de 145 à 160 °C au niveau de la tête de la colonne de rectification, une fraction à une température de 400 à 425 °C, ayant un point de fusion de 50 ± 2,5 °C et une valeur d'enthalpie de changement de phase ≥ 190 J/g, a été séparée ; une série de produits en cire à changement de phase ayant un point de fusion de 60 °C sont séparés en augmentant en continu la température de fonctionnement.

6. Procédé selon l'une quelconque des revendications 1 à 5, dans lequel le nombre de carbones de chaque produit en cire à changement de phase est de 3 à 5.

7. Procédé selon l'une quelconque des revendications 1 à 6, dans lequel la température de changement de phase des séries de produits en cire à changement de phase est 5 à 80 °C.
